# EUROPEAN PATENT APPLICATION

(11) **EP 4 586 469 A1**
(43) Date of publication of application: **16.07.2025**
(21) Application number: 25150525.1
(22) Date of filing: 07.01.2025
(51) Int. Cl.: H02K 5/10, H02K 5/22, H02K 7/00, H02K 11/21, H02K 11/33, H02K 5/15, H02K 5/16, H02K 5/06

(54) **NON-DRIVE END HOUSING ELEMENT OF AN ELECTRIC MACHINE HOUSING FOR AN ELECTRIC DRIVE ASSEMBLY OF A VEHICLE**

(30) Priority: 12.01.2024 FR 2400324
(71) Applicant: Valeo eAutomotive Germany GmbH, 91056 Erlangen (DE)
(72) Inventor: STUBER, Max, 91056 Erlangen (FR); ZHU, Bo, 94046 Créteil (FR); DAMICO, Mathieu, 94046 Créteil (FR); MONTEIL, Christophe, 94046 Créteil (FR)
(74) Representative: Valeo Powertrain Systems

(57) **Abstract**

The invention relates to an non-drive end housing element (6) for an electric drive assembly (1) of a vehicle, the non-drive end housing element (6) being configured to be associated with an electric machine (2) and comprising:
- a bell which comprises a back wall and an outer skirt which is intended to house one end of the electric machine (2) and which comprises a flange equipped with a first sealing gasket;
- the back wall of the bell comprising an opening which is intended to be traversed by the rotor shaft (9) and which opens in a recess intended to receive an angular position sensor, the said recess being arranged on a second side of the non-drive end housing element (6), opposite to the first side, and being constituted by a recess edge equipped with a second sealing gasket;
- the back wall of the bell further comprising a hole which is intended to be traversed by an electrical connection assembly (18) for connecting the electric machine (2) to an electric machine control module (4) ; the non-drive end housing element (6) comprising, projecting ledge which surrounds the hole, the projecting ledge being equipped with a third sealing gasket.

## Description

### Technical Field

The invention relates to the field of electric or hybrid vehicles.

More particularly, the invention relates to a non-drive end housing element of an electric machine housing for an electric drive assembly of a vehicle, an electric drive assembly comprising the non-drive end housing element and a vehicle comprising the electric drive assembly.

### Technological Background

Electric drive assembly typically comprises an electric rotary machine, a gearbox assembly, an electric machine control module, an electrical connection assembly which connects the electric machine control module to the electric rotary machine and sensors, such as an angular position sensor which delivers the angular position of the rotor shaft. The electric drive assembly comprises several sealing interfaces and more specifically: a sealing interface between the electric machine housing and a non-drive end housing element which closes one side of the electric machine housing, a sealing interface which insures sealing of the electrical connection assembly and a sealing interface which ensure sealing of a recess in which the angular position sensor is housed.

These sealed interfaces are produced using several subassemblies, which makes series assembly and robust sealing difficult to achieve.

### Summary

One underlying concept of the invention is therefore to propose an electric drive assembly which is easier to assemble and provides more robust sealing interfaces.

For this purpose, according to a first aspect, the invention provides a non-drive end housing element for an electric drive assembly of a vehicle, the non-drive end housing element being configured to be associated with an electric machine comprising a rotor which is non-rotatably connected to a rotor shaft, a stator and an electric machine housing in which the rotor and the stator are at least partially housed; the non-drive end housing element comprising :
- a bell which projects from a first side of the non-drive end housing element and comprises a back wall and an outer skirt which is intended to house one end of the electric machine and which comprises a flange equipped with a first sealing gasket which is intended to ensure sealing between the bell and the electric machine housing;
- the back wall of the bell comprising an opening which is intended to be traversed by the rotor shaft and which opens in a recess intended to receive an angular position sensor, the said recess being arranged on a second side of the non-drive end housing element, opposite to the first side, and being constituted by a recess edge which protrudes axially, and is equipped with a second sealing gasket intended to ensure sealing between the recess edge and a recess cover;
- the back wall of the bell further comprising a hole which is intended to be traversed by an electrical connection assembly for connecting the electric machine to an electric machine control module ; the non-drive end housing element comprising on the second side a projecting ledge which surrounds the hole, the projecting ledge being equipped with a third sealing gasket which is intended to ensure sealing between the projecting ledge and a casing of the electric machine control module.

Thus, such non-drive end housing element can tightly connect the electric machine housing, the electric machine control module and the recess cover and provides the sealing interfaces for the previously mentioned elements. This allows for bunching the sealing interfaces on the same element, reducing mechanical stresses in the assembly, and simplifying assembly of the whole electric drive assembly.

Depending on the embodiments, such non-drive end housing element may have one or more of the following features.

According to one embodiment, at least one of the first, second and third sealing gaskets is a cured in place gasket. Advantageously, all the first, second and third sealing gaskets are cured in place gaskets.

This further simplifies manufacturing by avoiding the need to handle prefabricated joints which tend to lead to failures in an automatized process.

According to one embodiment, the back wall of the bell comprises an annular skirt which is arranged around the opening, and which constitutes a bearing housing which is intended for housing a bearing arranged to rotatably guide the rotor shaft.

According to one embodiment, the recess edge comprises a window which passes through the said recess edge and opens into the recess, the window being designed to accept a connector intended to be connected to the angular position sensor and to the electric machine control module.

According to one embodiment, the back wall of the bell comprises a hole for positioning a sensor, such as a temperature sensor.

According to one embodiment, the flange has a plurality of apertures enabling the outer skirt to be attached to the electric machine housing.

According to one embodiment, the recess edge comprises a plurality of apertures enabling the recess cover to be attached to the non-drive end housing element to close the recess.

According to an embodiment, the non-drive end housing is made in one piece, advantageously molded in a metallic or alloy material.

According to one embodiment, the non-drive end housing element comprises a plurality of apertures arranged on the second side, and which enables the casing of the electric machine control module to be attached to the non-drive end housing element.

According to one embodiment, the invention also provides an electric drive assembly comprising the aforesaid non-drive end housing element, an angular position sensor housed in the recess, a recess cover attached to the recess edge and an electric machine comprising a rotor which is non-rotatably connected to a rotor shaft, a stator and an electric machine housing in which the rotor and the stator are at least partially housed, one end of the electric machine being housed in the bell, the electric machine housing being fastened to the flange of the bell and the rotor shaft passing though the opening.

According to one embodiment, the electric drive assembly further comprises an electric machine control module attached to the non-drive end housing element and an electrical connection assembly which passes through the hole and which is connected to an interconnector of the electric machine and to electrical connectors of the electric machine control module; the electric machine control module comprising a casing, the casing comprising a projecting portion which is positioned opposite the projecting ledge and which is pressed against the third sealing gasket, the projecting portion comprising a hole which allows the passage of a tool in order to fix the electrical connection assembly to electrical connectors of the electric machine control module, a fourth sealing gasket being arranged around the hole of the projecting portion and ensuring sealing between a second cover and the projecting portion.

According to one embodiment, the electric machine control module comprises an inverter which is configured to convert direct current power to alternating current power for input to the electric machine.

According to one embodiment, the invention also provides an automotive vehicle comprising the previously mentioned electric drive assembly.

### Brief Description of the Figures

The invention will be understood better, and further objects, details, characteristics, and advantages thereof will become clearer during the following description of several embodiments of the invention, which are given only by way of illustration and without limitation, with reference to the appended drawings.
Figure 1 is a schematic view of an electric drive assembly.
Figure 2 is a perspective view of the non-drive end housing element showing its side which is intended to face the electric machine.
Figure 3 is a perspective view of the non-drive end housing element showing its side which is intended to face the electric machine control module.
Figure 4 is a detailed perspective view of the non-drive end housing element and the projection portion of the electric machine control module.
Figure 5 is a cut view showing the electrical connection assembly and the projecting portion of the electric machine control module.

### Description of the embodiments

In the description and claims, the terms "external" and "internal" as well as "axial" and "radial" orientations will be used to designate, according to the definitions given in the description, elements of the electric drive assembly. By convention, the axis X of rotation of the rotor of the rotating electric machine defines the "axial" orientation. The "radial" orientation is directed orthogonally to the axis X and, from the inside towards the outside moving away from said axis X.

The electric drive assembly 1 is designed to equip a hybrid or electric motor vehicle.

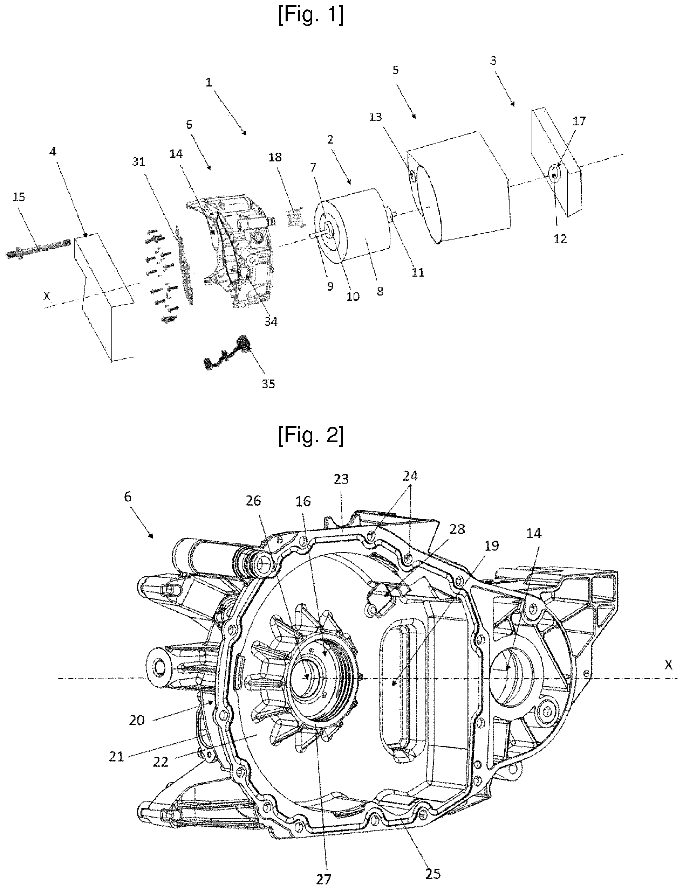

As shown in Figure 1, the electric drive assembly 1 comprises an electric machine 2, a gearbox assembly 3 and an electric machine control module 4. The electric drive assembly 1 also comprises an electric machine housing 5 into which the electric machine 2 is disposed and which has, for instance, a general shape of a cylinder of revolution. The electric machine housing 5 is closed on one side, i.e. the drive end, by the cover of the gear box assembly 3 and, on the other side, i.e. the non-drive end, by a non-drive end housing element 6.

The electric machine 2 is for example a permanent magnet synchronous electric machine or an alternating current asynchronous electric machine. The electric machine 2 comprises a rotor 7 and a stator 8. In the illustrated embodiment, the stator 8 radially surrounds the rotor 7 and the electric machine 2 is a radial flux rotating electric machine. However, in non-illustrated embodiments, the electric machine 2 is an axial flux rotating electric machine which means it has at least one stator axially opposite at least one rotor so that the gap between the rotor and the stator, and therefore the direction of magnetic flux between the two, is aligned parallel with the axis of rotation, rather than radially.

The stator 8 includes an iron core which carries windings. The iron core is formed with a plurality of groove in the inside of which the windings are inserted. The iron core comprises for instance a plurality of plate, such as electrical steel plate, which are layered and caulked to each other to form a laminate.

According to an embodiment wherein the electric machine 2 is a permanent magnet synchronous electric machine, the rotor 7 includes permanent magnets which creates magnetic field that synchronizes with the rotating magnetic field produced by the stator windings. According to an alternative embodiment wherein the electric machine is an alternating current asynchronous electric machine, the rotor 7, being composed of conductive material, induces currents due to the changing magnetic field, which in turn creates a secondary magnetic field that interacts with the stator's field, resulting in rotor motion.

The rotor 7 is rotatably mounted on the electric machine housing 5 around the rotation axis X. More particularly, the rotor 7 is non-rotatably connected to a rotor shaft 9 which is rotatably mounted along the X axis. In the illustrated embodiment of figure 1, the rotor shaft 9 is rotatably guided by means of a pair of bearings 10, 11 which are respectively housed in a bearing housing 16, shown in Figure 2, arranged in the non-drive end housing element 6 and in a bearing housing 17 arranged in the cover of the gear box assembly 3.

The rotor shaft 9 passes through at least one hole 12 arranged in the cover of the gear box assembly 3 to be coupled to a gear input shaft, not shown, of the gear box assembly 3. The gear input shaft is for instance disposed coaxially with the rotor shaft 9 and therefore receives the torque from the electric machine 2. It should be understood that the rotor shaft 9 and the gear input shaft may be two different shafts rotatably connected by a connecting element (e.g. connected by splines) or may be the same shaft.

In the illustrated embodiment, the electric drive assembly 1 is intended to be arranged longitudinally between two wheels. In other words, the rotation axis X of the electric machine 2 is parallel to the wheel axles. Furthermore, the gear box assembly 3 also includes a differential assembly, not shown, which is coupled to the gearbox input shaft through gear sets. The differential assembly allows the wheels to rotate at different speeds and distribute the torque and load between the wheel axles. In the illustrated embodiment, one of the wheel axles 15 passes through holes 13, 14 arranged in the electric machine housing 5 and the non-drive end housing element 6.

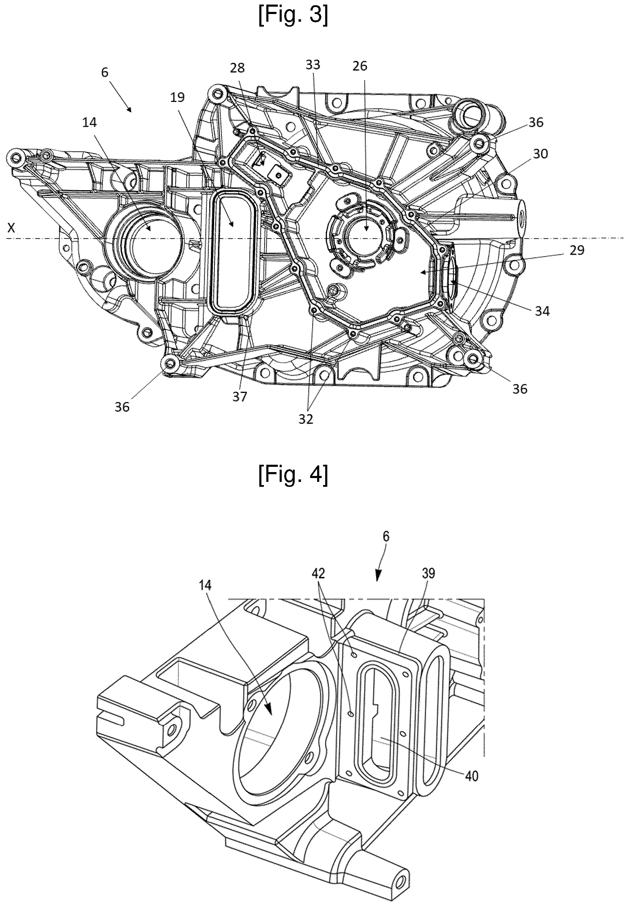

The electric drive assembly 1 comprises an electrical connection assembly 18 which is configured to electrically connect the electric machine control module 4 to the stator 8 of the electric machine 2, and more precisely to an interconnector of the stator 8. Such an interconnector, not illustrated, is configured to connect the windings of the stator 8 to the electrical connection assembly 18. The electrical connection assembly 18 passes through a hole 19, described below in relation with figures 2 and 3, arranged in the non-drive end housing element 6.

As shown in Figure 1, the electrical connection assembly 18 comprises multiple busbars (e.g. copper busbars). The number of busbars may be four, used for three phases of current and neutral, respectively.

In relation to Figures 2 and 3, the features of the non-drive end housing element 6 according to an embodiment will now be described. The non drive end housing element 6 is advantageously made in one piece and is and is preferably molded in a metallic or alloy material. Figure 2 shows the side of the non-drive end housing element 6 which faces the electric machine 2 while figure 3 shows the side of the non-drive end housing element 6 which faces the electric machine control module 4.

As shown in Figure 2, the non-drive end housing element 6 comprises a bell 20 which projects towards the electric machine housing 5 and inside which is housed one end of the electric machine 2. The bell 20 has an outer skirt 21 and a back wall 22. The bell 20 is fastened to the electric machine housing 5. For that purpose, the end of the outer skirt 21 comprises a flange 23 with a plurality of apertures 24 distributed around the axis X, enabling the outer skirt 21 to be attached to the electric machine housing 5 by means of fastening elements, such as screws. Besides, the flange 23 is equipped with a sealing gasket 25 which is intended to ensure sealing between the bell 20 and the electric machine housing 5.

According to a preferred embodiment, the sealing gasket 25 is a Cure-In-Place gasket (CIPG). Such sealing gasket 25 is achieved by applying the joint in liquid form and then curing it to create a solid, uniform compression joint. The sealing gasket 25 is for instance made in a material chosen among silicone and polyurethane. The curing process can be achieved by UV, heat, or multi-component system reaction. According to another embodiment, the sealing gasket 25 is prefabricated and installed afterwards in a corresponding groove arranged in the flange 23.

The back wall 22 of the bell 20 has an opening 26 through which the rotor shaft 9 of the electric machine 2 can pass. Thus, as it will be explained below, an angular position sensor configured to deliver a signal representative of the angular position of the rotor shaft 9 can be arranged on the other side of the non-drive end housing element 6.

The back wall 22 of the bell 20 also comprises, around the opening 26, an annular skirt 27 which constitutes the bearing housing 16 which is intended for housing one the two bearings 10, 11 which rotatably guide the rotor shaft 9.

The back wall 22 of the bell 20 also comprises the hole 19 which is intended to be traversed by the electrical connection assembly 18 which electrically connect the electric machine control module 4 and the stator 8 of the electric machine 2 respectively arranged on both sides of the non-drive end housing element 6.

In the illustrated embodiment, the back wall 22 also comprises a hole 28 for positioning a temperature sensor which is configured to deliver a signal representative of the temperature of the rotor 7 and/or the stator 8.

In the illustrated embodiment, the non-drive end housing element 6 also comprises the hole 14 through which passes one of the wheel axles 15.

As shown in Figure 3, the non-drive end housing element 6 comprises a recess 29 into which the opening 26 for the rotor shaft 9 opens and which is defined by a recess edge 30 which protrudes axially towards the electric machine control module 4. The recess 29 provides housing for the angular position sensor. The recess 29 is intended to be closed with a recess cover 31, shown in figure 1. For that purpose, the recess 29 is flanked with a plurality of apertures 32, such as threaded apertures, arranged in the recess edge 30 enabling the recess cover 31 to be attached to non-drive end housing element 6 by means of fastening elements, such as screws.

The recess edge 30 is equipped with a sealing gasket 33 which is intended to ensure sealing between the said recess edge 30 and the recess cover 31. The sealing gasket 33 is advantageously a Cured-In-Place gasket (CIPG) but, alternatively, may be a prefabricated gasket housed in a groove formed in the recess edge 30.

The non-drive end housing element 6 comprises a window 34 which is arranged in the recess edge 30 and passes through it so as to open into the recess 29. The window 34 is designed to accept a connector 35, shown in Figure 1. The connector 35 is intended to be connected to the angular position sensor, on the one hand, and to the electric machine control module 4, on the other hand, and can therefore transmit the signal representative of the angular position of the rotor shaft 9 from the angular position sensor to the electric machine control module 4. According to an advantageous embodiment, the temperature sensor which is arranged in the hole is also electrically connected to the connector 35.

According to an embodiment, the angular position sensor is a resolver. The resolver comprises a resolver rotor which is attached to the end of the rotor shaft 9 protruding into the recess 29 and a resolver stator which surrounds the resolver rotor. The resolver stator is electrically connected to the connector. According to an alternative embodiment, the angular position sensor is an absolute encoder. The absolute encoder comprises, on the one hand, a circular disk which is attached to the end of the rotor shaft 9 protruding into the recess 29 and which comprises coded tracks that represent the absolute angular information and, on the other hand, a reading head or sensor which is configured to detect the encoded information on the disk as it rotates.

The non-drive end housing element 6 further comprises a plurality of apertures 36, such as threaded apertures, arranged on its side which faces the electric machine control module and which enables the casing of the electric machine control module 4 to be attached to the non-drive end housing element 6 by means of fastening elements, such as screws.

The electric machine control module 4 is advantageously an inverter which is configured to convert direct current (DC) power to alternating current (AC) power for input to the electric machine 2. The inverter is also configured to control and regulate the output frequency and voltage.

The non-drive end housing element 6 comprises a projecting ledge 37 which surrounds the hole 19 intended to be traversed by the electrical connection assembly 18. The projecting ledge 37 protrudes axially towards the electric machine control module 4 and is intended to face a corresponding opening made in a casing of the electric machine control module 4. Furthermore, the projecting ledge 37 is equipped with a sealing gasket 38 which is intended to ensure sealing between the said projecting ledge 37 and the casing of the electric machine control module 4. The sealing gasket 38 may be a Cured-In-Place gasket (CIPG) or a prefabricated gasket.

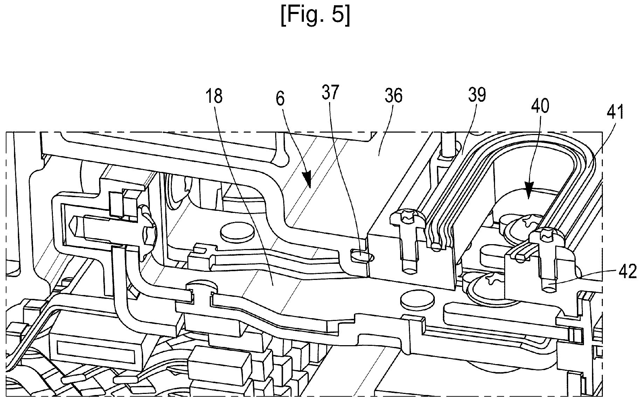

As shown in Figures 4 and 5, the casing of the electric machine control module 4 comprises a projecting portion 39 which is positioned opposite the projecting ledge 37 and which is pressed against the sealing gasket 38. The projecting portion 39 comprises a hole 40 which allows the passage of a tool, such as a screwdriver, to fix the busbars of the electrical connection assembly 18 to electrical connectors of the electric machine control module 4. Furthermore, the projecting portion 39 also comprise a plurality of apertures 42, such as threaded apertures, enabling a second cover, not shown, to be attached to the projecting portion 39. Moreover, a sealing gasket 41 is arranged around the hole 40 and is intended to ensure sealing between the second cover and the projecting portion 39.

Although the invention has been described in connection with several embodiments, it is very clear that it is in no way limited thereto and that it comprises all the technical equivalents of the means described as well as their combinations, if these fall within the scope of the invention as claimed.

The use of the verb "have", "comprise" or "include" and its conjugated forms does not exclude the presence of elements or steps other than those mentioned in a claim.

In the claims, any reference in parentheses should not be interpreted as a limitation of the claim.

## Claims

1. Non-drive end housing element (6) for an electric drive assembly (1) of a vehicle, the non-drive end housing element (6) being configured to be associated with an electric machine (2) comprising a rotor (7) which is non-rotatably connected to a rotor shaft (9), a stator (8) and an electric machine housing (5) in which the rotor (7) and the stator (8) are at least partially housed; the non-drive end housing element (6) comprising:
- a bell (20) which projects from a first side of the non-drive end housing element (6) and comprises a back wall (22) and an outer skirt (21) which is intended to house one end of the electric machine (2) and which comprises a flange (23) equipped with a first sealing gasket (25) which is intended to ensure sealing between the bell (20) and the electric machine housing (5);
- the back wall (22) of the bell (20) comprising an opening (26) which is intended to be traversed by the rotor shaft (9) and which opens in a recess (29) intended to receive an angular position sensor, the said recess (29) being arranged on a second side of the non-drive end housing element (6), opposite to the first side, and being constituted by a recess edge (30) which protrudes axially and is equipped with a second sealing gasket (33) intended to ensure sealing between the recess edge (30) and a recess cover (31);
- the back wall (22) of the bell (20) further comprising a hole (19) which is intended to be traversed by an electrical connection assembly (18) for connecting the electric machine (2) to an electric machine control module (4) ; the non-drive end housing element (6) comprising, on the second side, a projecting ledge (37) which surrounds the hole (19), the projecting ledge (37) being equipped with a third sealing gasket (38) which is intended to ensure sealing between the projecting ledge (37) and a casing of the electric machine control module (4).

2. Non-drive end housing element (6) according to claim 1, wherein at least one of the first, second and third sealing gaskets (25, 33, 38) is a cured in place gasket.

3. Non-drive end housing element (6) according to claim 1 or 2, wherein the back wall (22) of the bell (20) comprises an annular skirt (27) which is arranged around the opening (26) and which constitutes a bearing housing (16) which is intended for housing a bearing (10) arranged to rotatably guide the rotor shaft (9).

4. Non-drive end housing element (6) according to any one of claims 1 to 3, wherein the recess edge (30) comprises a window (34) which passes through the said recess edge (30) and opens into the recess (29), the window (34) being designed to accept a connector (35) intended to be connected to the angular position sensor and to the electric machine control module (4).

5. Non-drive end housing element (6) according to any one of claims 1 to 4, wherein the back wall (22) of the bell (20) comprises a hole (28) for positioning a sensor, such as a temperature sensor.

6. Non-drive end housing element (6) according to any one of claims 1 to 5, wherein the flange (23) has a plurality of apertures enabling the outer skirt (21) to be attached to the electric machine housing (5).

7. Non-drive end housing element (6) according to any one of claims 1 to 6, wherein the recess edge (30) comprises a plurality of apertures (32) enabling the recess cover (31) to be attached to the non-drive end housing element (6) to close the recess (29).

8. Non-drive end housing element (6) according to any one of claims 1 to 7, comprising a plurality of apertures (36) arranged on the second side and which enables the casing of the electric machine control module (4) to be attached to the non-drive end housing element (6).

9. Electric drive assembly (1) comprising a non-drive end housing element (6) according to any one of claims 1 to 9, an angular position sensor housed in the recess (29), a recess cover (31) attached to the recess edge and an electric machine (2) comprising a rotor (7) which is non-rotatably connected to a rotor shaft (9), a stator (8) and an electric machine housing (5) in which the rotor (7) and the stator (8) are at least partially housed, one end of the electric machine (2) being housed in the bell (20), the electric machine housing (5) being fastened to the flange (23) of the bell (20) and the rotor shaft (9) passing through the opening (26).

10. Electric drive assembly (1) according to claim 9, further comprising an electric machine control module (4) attached to the non-drive end housing element (6) and an electrical connection assembly (18) which passes through the hole (19) and which is connected to an interconnector of the electric machine (2) and to electrical connectors of the electric machine control module (4); the electric machine control module (4) comprising a casing, the casing comprising a projecting portion (39) which is positioned opposite the projecting ledge (37) and which is pressed against the third sealing gasket (38), the projecting portion (39) comprising a hole (40) which allows the passage of a tool in order to fix the electrical connection assembly (18) to electrical connectors of the electric machine control module (4), a fourth sealing gasket (41) being arranged around the hole (40) of the projecting portion (39) and ensuring sealing between a second cover and the projecting portion(39).

11. Electric drive assembly (1) according to claim 10, wherein the electric machine control module (4) comprises an inverter which is configured to convert direct current power to alternating current power for input to the electric machine (2).

12. Automotive vehicle comprising an electric drive assembly (1) according to claims 9 to 11.
